# EUROPEAN PATENT SPECIFICATION

(11) **EP 4 166 821 B1**
(45) Date of publication and mention of the grant of the patent: **18.09.2024**
(21) Application number: 22202074.5
(22) Date of filing: 18.10.2022
(51) Int. Cl.: F16H 61/21, F16H 61/4157, F16H 61/42, F16H 59/54

(54) **A METHOD AND AN APPARATUS FOR CONTROLLING A HYDROSTATIC TRANSMISSION OF A WORK VEHICLE**
VERFAHREN UND VORRICHTUNG ZUR STEUERUNG EINES HYDROSTATISCHEN GETRIEBES EINES ARBEITSFAHRZEUGS
PROCÉDÉ ET APPAREIL DE COMMANDE D'UNE TRANSMISSION HYDROSTATIQUE D'UN VÉHICULE DE TRAVAIL

(30) Priority: 18.10.2021 IT 202100026621
(43) Date of publication of application: 19.04.2023
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- US-A1- 2014 023 523
- US-B2- 10 808 839
- US-B2- 8 261 544

## Description

### TECHNICAL FIELD

The invention concerns a method and an apparatus for controlling a hydrostatic transmission of a vehicle, in particular a work vehicle such as a wheel loader.

### BACKGROUND OF THE INVENTION

Work vehicles like wheel loaders, in particular of a compact type, are normally provided with hydrostatic transmissions to drive the wheels.

A hydrostatic transmission usually includes a variable displacement pump and a hydraulic motor supplied by the pump to drive the wheels.

The variable displacement pump is driven by an internal combustion engine, which is intended for driving also other devices or pumps to carry out auxiliary functions of the work vehicle, such as steering, operating implements, and the like.

In some cases as in US8261544B2, the displacement of the pump is controlled by a vehicular control unit as a function of a braking request from the driver, for example imparted by means of the depression of a braking pedal.

In particular, a higher depression of the braking pedal corresponds to a greater reduction of the displacement, in turn corresponding to a greater reduction of the vehicle speed. Indeed, the lower is the displacement the lower is the vehicle speed, providing that the engine output speed have not been changed, which is appropriate to ensure a regular performance of the auxiliary functions.

Therefore, in the above cases, the braking of the work vehicle is carried out by exploiting the properties of the hydrostatic transmission.

In this context, a general need is felt to improve the braking performances of the work vehicle.

An object of the invention is to satisfy this need, possibly in a simple and cost effective manner.

US 8 261 544 B2 also describes a work vehicle comprising a hydrostatic transmission, and a method, as well as an apparatus to control the hydrostatic transmission.

### SUMMARY OF THE INVENTION

The object is reached by a method and an apparatus defined by the independent claims.

Dependent claims set out particular embodiments of the invention.

### BRIEF DESCRIPTION OF DRAWINGS

Embodiments of the invention will be disclosed in the following by way of non-limiting examples and with reference to the drawings, wherein:
- Figure 1 is a scheme of a work vehicle comprising an apparatus according to the invention; and
- Figures 2, 3 are graphs of functions linking operative parameters of the work vehicles.

### DETAILED DESCRIPTION OF THE INVENTION

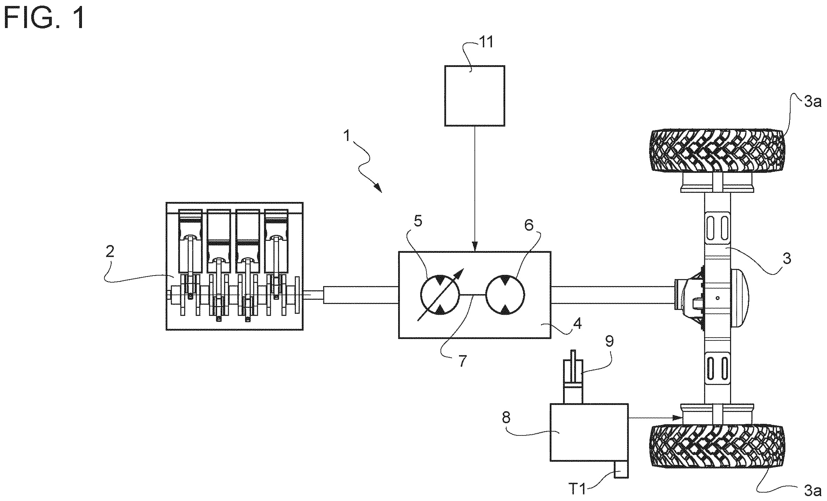

In Figure 1, reference number 1 indicates, as a whole, a motor vehicle, in particular a work vehicle such as a tractor.

Vehicle 1 comprises an engine 2, a drive axle 3, and a hydrostatic transmission 4 as a continuously variable transmission (CVT).

The drive axle 3 can be coupled to the transmission 4, such that the latter can drive the drive axle 3. The drive axle 3 carries a pair of wheels 3a.

Moreover, the transmission 4 can be coupled to the engine 2, such that the latter can drive the transmission 4 and thus the drive axle 3 accordingly.

Therefore, the drive axle 3 can be coupled to the engine 2 via the transmission 4.

The transmission 4 is configured to transmit an output power of the engine 2 to the drive axle 3; the transmission 4 comprises:
- a variable displacement pump 5, in particular connected to the engine 2 to receive at least a portion of the engine output power, and
- a hydraulic motor 6 arranged to be supplied by the pump 5 with a fluid flow and configured to convert the fluid flow into mechanical power to drive the axle 3.

More in detail, the transmission 4 comprises at least one piping 7 connecting an output of the pump 5 to an input of the motor 6.

The vehicle 1 further comprises a braking device 8 configured to brake the vehicle 1 itself and more precisely the wheels 3a thereof.

With greater detail, the breaking device 8 is a hydraulic braking device. Therefore, in other words, the breaking device 8 is configured to be driven by means of a brake fluid.

In particular, the braking device 8 comprises at least one hydraulic actuator 9 arranged to drive the braking device 8.

The vehicle 1 further comprises an apparatus for controlling the transmission 4.

The apparatus comprises a control unit 11 configured to carry out a control method of the transmission 4.

Control unit 11 is configured to determine a first quantity being indicative of a temperature of the braking device 8.

With detail, the first quantity is indicative of a temperature of the brake fluid.

The temperature or, more in general, the first quantity may be determined by the control unit 11 by acquisition of one or more signals generated by transducers of the apparatus, in particular a transducer T1 making part of the apparatus.

Transducer T1 is coupled to the braking device 8 and configured to detect the first quantity or the temperature, and to generate an associated signal.

Control unit 11 extracts information concerning the first quantity from the signal.

According to the invention, control unit 11 is configured to control the displacement of the pump 5 to brake or in other words to cause a deceleration of the vehicle 1 as a function of the first quantity.

With greater detail, the control of the displacement involves a decrease of the displacement correspondingly to an increase of the first quantity. This holds, in particular, ceteris paribus, i.e. with other conditions remaining the same.

Indeed, the increase of the first quantity corresponds to a condition of high effort of the braking device 8. Therefore, the decrease of the displacement helps the braking device 8 to brake the vehicle 1, since actually causing a deceleration thereof by means of the transmission 4, thus reducing the needed effort.

Preferably, control unit 11 is configured to control the displacement also as a function of a second quantity being indicative of a requested deceleration for the vehicle 1.

Control unit 11 is configured to determine the second quantity, for example by acquiring an associated command signal for controlling the braking device 8 emitted by a braking command device of the vehicle 1, such as a brake pedal. In particular, the braking command device is operable by a driver of the vehicle 1 and is configured to emit the command signal according to how it is actually operated by the driver.

Precisely, as common, the second quantity is a current or voltage proportional to a quantity indicative of an operation of the braking command device, like e.g. the depression of the brake pedal. For example, the latter quantity may be an inclination angle of the brake pedal.

More in general, the second quantity increases with the requested deceleration.

Considering an increasing second quantity, e.g. a ramp of the latter from a minimum to a maximum value, the control involves a decrease of the displacement.

More specifically, the decrease of the displacement is higher correspondingly to an increase of the first quantity.

In detail, control unit 11 may store a first mapping function linking the second quantity to a pump command to be emitted by the same control unit 11; the pump command is suitable for adjusting the displacement.

For example, the pump command may one-to-one correspond or be associated to a derating factor that indicates a corresponding decrement of the requested displacement. For example, the derating factor can be expressed by a percentage value.

The pump command may be a current or a voltage; the higher is the current or voltage the lower is the corresponding derating factor. In particular, the maximum current or voltage corresponds to a null derating factor, in turn corresponding to the maximum requested displacement of pump 5.

Indeed, the pump 5 is supplied with the current or voltage; in other more general words, the pump 5 receives the pump command emitted by the control unit 11.

The pump 5 is configured such that the displacement decreases with the decrease of current or voltage, i.e. with the pump command.

The first mapping function is variable based on the first quantity. In other words, the mapping function has multiple variables, including the first quantity and the second quantity. Namely, in still other words, each of the first and the second quantity may independently define a variable of the mapping function. Hence, the mapping function links all its variables to the pump command, or more specifically to the corresponding derating factor.

According to a further interpretation, the first mapping function is a function composition.

Control unit 11 is configured to emit the pump command according to the first mapping function based on the second quantity to control the pump 5, in particular taking into account that the first mapping function changes or is recomputed based on the determined first quantity.

This means more specifically that control unit 11 is actually configured to emit the pump command resulting from the application of the mapping function on the determined quantities that define the variables of the same first mapping function (i.e. the second quantity and the first quantity).

For example, the first mapping function may be represented by a plurality of curves being each associated to one or more values of a parameter corresponding to the first quantity.

Specifically, the parameter is defined by the first quantity.

The curves lie on a two-dimensional space defined by the variable corresponding to the second quantity and by a further variable corresponding to the pump command.

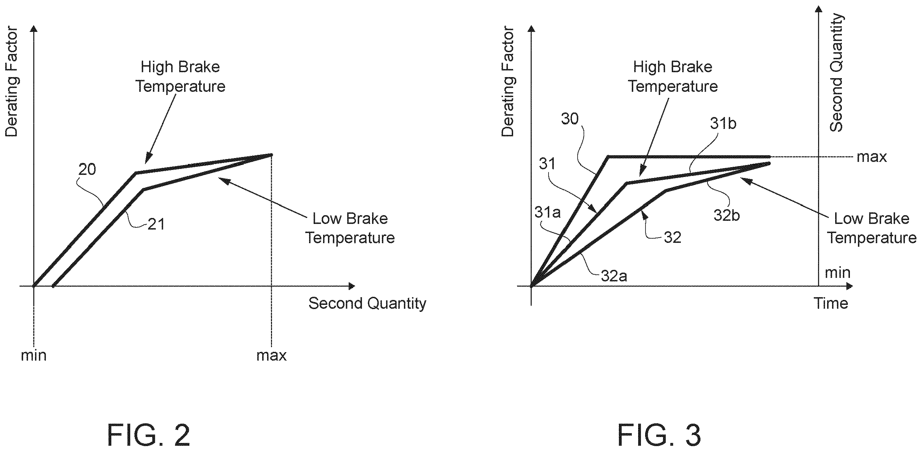

In particular, Figure 2 shows one chart that represents the two dimensional space: the abscissa axis represents the variable corresponding to the second quantity, e.g. a brake pedal position or inclination angle; the ordinate axis represents the variable corresponding to the pump command, e.g. the derating factor.

Figure 2 shows the curves associated to the parameter, more precisely to one or more values thereof. In particular, Figure 2 shows two curves 20, 21 respectively associated to a high and a low temperature.

Here, the parameter is the temperature. The high temperature is defined by a range of temperature values beyond a given threshold, whereas the low temperature is defined by the complementary range of temperature values below or equal to the same threshold.

Clearly, this is not limiting; more than two curves can be provided in association with corresponding ranges of temperature values. Possibly, an infinite number of curves can even be provided in association with corresponding infinite temperature values.

Each of the curves 20, 21 is continuous and linear, in particular increasing, more in particular with a plurality of increasing portions with different slopes: specifically, the slopes decrease with the increase of the variable corresponding to the second quantity.

Furthermore, each of the curves 20, 21 starts from a null derating factor (no decrement of the displacement) and ends on a same maximum derating factor (maximum decrement of the displacement).

The curves 20, 21 start from different values of the variable corresponding to the second quantity and end on the same value of the same variable. In particular, the curve 21 starts from a higher value of the variable, with respect to the curve 20.

The limits of the abscissa axis represent respectively the condition of no request of braking and the condition of the request of maximum braking.

The limits of the ordinate axis represent respectively the condition of maximum and minimum pump displacement (no derating and maximum derating, respectively).

Preferably, control 11 is further configured to control even the dynamics, i.e. the trend over time of the displacement as a function of the first quantity.

More in detail, according to a preferred aspect of the invention, the control of the displacement comprises an increase of the velocity of the decrease of the displacement correspondingly to an increase of the first quantity.

For example, the greater is the first quantity the faster is the decrease of the displacement.

In other words, the displacement is controlled more aggressively or with an increased promptness when the first quantity is higher.

Possibly, control unit 11 may be configured to control just the dynamics of the displacement as a function of the first quantity.

In particular, alternatively or additionally to the first mapping, control unit 11 may store a second mapping function linking the time trend of the second quantity to a time trend of the pump command or, correspondingly, of the derating factor.

In other words, time trends of the second quantity are associated or linked by the second mapping to respective time trends of the pump command.

Specifically, the time trend of the second quantity may be a ramp, for example from a minimum value, in particular corresponding to a null braking request, to a maximum value.

The second mapping function, similarly to the first mapping function, is variable based on the first quantity.

Control unit 11 is configured to emit the pump command according to the second mapping function based on the trend (specifically, the actual one) of the determined second quantity to control the pump 5, in particular taking into account that the second mapping function changes or is recomputed based on the determined first quantity.

In particular, the second mapping function may comprise or be considered as the association of a first time curve representing a time trend of the second quantity to a plurality of second time curves being each associated to one or more values of the parameter and representing a corresponding time trend of the pump command or, correspondingly, of the derating factor.

More precisely, the pump command emitted by control unit 11 corresponds to one of the second time curves, which in turn corresponds to the determined first quantity and to the time trend of the determined second quantity.

Figure 3 is a chart representing conceptually the second mapping; Figure 3 shows one abscissa axis representing time and two ordinate axes: the left ordinate axis represents the variable corresponding to the pump command, e.g. the derating factor, whereas the right ordinate axis represents the variable corresponding to the second quantity.

Figure 3 further shows a curve 30, which pertains to the right ordinate axis and represents an example of the first time curve. In particular, the curve 30 is a ramp.

Furthermore, Figure 3 shows two curves 31, 32, which pertain to the left ordinate axis and represent an example of the second time curves.

The curves 31, 32 are both associated to the curve 30. In addition, each of the curves 31, 32 is associated to the parameter, more precisely to one or more corresponding values thereof. In particular, the curves 31, 32 are respectively associated to a high and a low temperature.

Therefore, the parameter is again the temperature here. The meaning of low and high temperature is here analogous to that discussed with respect to Figure 2.

Clearly, again, more than two curves can be provided with corresponding ranges of temperature values.

Each of the curves 31, 32 is continuous and linear, in particular increasing, more in particular with a plurality of increasing portions with different slopes: specifically, the slopes decrease with the increase of time.

In particular, each of the curves 31, 32 starts from a null derating factor (no decrement of the displacement) and ends on a same maximum derating factor (maximum decrement of the displacement).

The first portion 31a of curve 31, i.e. the portion starting from the initial time instant, is steeper than the first portion 32a of curve 32, i.e. the portion starting from the initial time instant.

More specifically, the contrary holds for the second portions 31b, 32b of curves 31, 32, i.e. the portions that immediately follow in time the first portions 31a, 32a: the portion 32b is steeper than the portion 31b.

In view of the above, the first and the second mapping can be possibly used in a combined manner to control the displacement. Indeed, the first mapping sets the static value to be reached by the pump command or the derating factor at the end of a transitory phase. Then, the second mapping sets the time trend of the pump command during the transitory phase. The condition for combining the first and the second mapping is that the set time trend has an ending value coinciding with the set static value at the end of the transitory phase.

The examples of figures 2-3 are merely explanatory and non-limiting. In particular, figures 2-3 can be considered as separated representative examples of the first and the second mapping without any actual correspondence between them. Therefore, a corresponding second mapping that is compatible, i.e. combinable, with the first mapping represented in Figure 2 can be envisaged in view of the above disclosure. Similarly, a corresponding first mapping that is compatible with the second mapping represented in Figure 3 can be envisaged as well, in view of the above disclosure.

In view of the foregoing, the advantages of the apparatus and the method according to the invention are apparent.

Specifically, the braking of the vehicle 1 is optimized thanks to the intelligent control of the hydrostatic transmission 4, based on the determined first quantity.

The first quantity is a specific quantity that is strongly correlated to the braking performances of the vehicle 1. Actually, such performances are extremely sensitive to the first quantity.

Eventually, it is clear that modifications can be made to the described apparatus and method, which do not extend beyond the scope defined by claims.

## Claims

1. A method for controlling a hydrostatic transmission (4) of a vehicle (1) when deceleration of the vehicle is requested, the hydrostatic transmission (4) comprising a variable displacement pump (5) and a hydraulic motor (6) arranged to be supplied by the variable displacement pump (5) to drive an axle (3) of the vehicle (1), the method being **characterized in that** it comprises the steps of:
a. determining a first quantity indicative of a temperature of a braking device (8) of the vehicle (1) configured to brake the vehicle (1),
b. controlling a displacement of the variable displacement pump (5) to cause a deceleration of the vehicle as a function of the first quantity.

2. The method of claim 1, wherein the temperature is the one of a brake fluid used to drive the braking device (8).

3. The method of claim 1 or 2, wherein the step b. comprises a decrease of the displacement correspondingly to an increase of the first quantity.

4. The method of any of the foregoing claims, wherein the step b. comprises decreasing the displacement with an increased velocity correspondingly to an increase of the first quantity.

5. The method of any of the foregoing claims, further comprising the step of:
c. determining a second quantity indicative of a requested deceleration of the vehicle (1),
wherein the step b. comprises controlling the displacement also as a function of the second quantity.

6. The method of claim 5, further comprising the steps of:
d. providing a first mapping function linking the second quantity to a pump command for adjusting the displacement,
e. emitting the pump command according to the first mapping function, based on the second quantity determined during the step c., to carry out the step b.,
wherein the first mapping function is variable based on the first quantity.

7. The method of claim 6, wherein the first mapping function is representable by a plurality of curves (20, 21) being each associated to one or more values of a parameter corresponding to the first quantity,
wherein the curves (20, 21) lie on a two-dimensional space defined by two variables respectively corresponding to the pump command and the second quantity.

8. The method of claim 7, wherein the pump command emitted during the step e. corresponds to the second quantity determined during the step c. according to one of the curves (20, 21), said one of the curves corresponding to the first quantity determined during step a.

9. The method of any of claims 5 to 8, further comprising the steps of:
f. providing a second mapping function linking time trends of the second quantity to respective time trends of the pump command, and
g. emitting the pump command according to the second mapping function based on an actual time trend of the second quantity determined during the step c., to carry out the step b.,
wherein the second mapping function is variable based on the first quantity.

10. The method of claim 9, wherein the second mapping function comprises an association of a first time curve (30) representing one of the time trends of the second quantity to a plurality of second time curves (31, 32) being each associated to one or more values of the parameter and representing a corresponding one of the time trends of the pump command.

11. The method of claim 10, wherein the pump command emitted during the step g. corresponds to one of the second time curves (31, 32) corresponding to the first quantity determined during the step a. and to the actual time trend of the second quantity determined during the step c.

12. An apparatus for controlling a hydrostatic transmission (4) of a vehicle (1), the hydrostatic transmission (4) comprising a variable displacement pump (5) and a hydraulic motor (6) arranged to be supplied by the variable displacement pump (5) to drive an axle (3) of the vehicle (1), **characterized in that** the apparatus comprises a control unit (11) that determines a first quantity indicative of a temperature of a braking device (8) of the vehicle (1) configured to brake the vehicle (1) based on one or more signals generated by a transducer forming part of the apparatus, wherein the apparatus is programmed to implement the method of any of the foregoing claims.

## Patentansprüche

1. Verfahren zum Steuern eines hydrostatischen Getriebes (4) eines Fahrzeugs (1), wenn ein Bremsvorgang des Fahrzeugs angefordert wird, wobei das hydrostatische Getriebe (4) eine Verstellpumpe (5) und einen Hydraulikmotor (6) umfasst, der angeordnet ist, um von der Verstellpumpe (5) versorgt zu werden, um eine Achse (3) des Fahrzeugs (1) anzutreiben,
wobei das Verfahren **dadurch gekennzeichnet ist, dass** es die folgenden Schritte umfasst:
a. Bestimmen einer ersten Größe, die für eine Temperatur einer Bremsvorrichtung (8) des Fahrzeugs (1), die dazu eingerichtet ist, das Fahrzeug (1) abzubremsen, kennzeichnend ist,
b. Steuern einer Verdrängung der Verstellpumpe (5), um einen Bremsvorgang des Fahrzeugs in Abhängigkeit von der ersten Größe zu bewirken.

2. Verfahren nach Anspruch 1, wobei die Temperatur die eines Bremsfluids ist, das zum Antreiben der Bremsvorrichtung (8) verwendet wird.

3. Verfahren nach Anspruch 1 oder 2, wobei der Schritt b. eine Abnahme der Verdrängung entsprechend einer Zunahme der ersten Größe umfasst.

4. Verfahren nach einem der vorhergehenden Ansprüche, wobei der Schritt b. ein Reduzieren der Verdrängung bei einer erhöhten Geschwindigkeit umfasst, die mit einer Zunahme der ersten Größe in Beziehung steht.

5. Verfahren nach einem der vorhergehenden Ansprüche, des Weiteren den folgenden Schritt umfassend:
c. Bestimmen einer zweiten Größe, die für einen angeforderten Bremsvorgang des Fahrzeugs (1) kennzeichnend ist,
wobei der Schritt b. das Steuern der Verdrängung ebenfalls in Abhängigkeit von der zweiten Größe umfasst.

6. Verfahren nach Anspruch 5, des Weiteren die folgenden Schritte umfassend:
d. Bereitstellen einer ersten Abbildungsfunktion, die die zweite Größe einem Pumpenbefehl zum Einstellen der Verdrängung zuordnet,
e. Ausgeben des Pumpenbefehls gemäß der ersten Abbildungsfunktion auf Basis der zweiten Größe, die während des Schritts c. bestimmt wird, um den Schritt b. auszuführen,
wobei die erste Abbildungsfunktion in Abhängigkeit von der ersten Größe variabel ist.

7. Verfahren nach Anspruch 6, wobei die erste Abbildungsfunktion durch eine Mehrzahl von Kurven (20, 21) darstellbar ist, die jeweils mit einem oder mehreren Werten eines Parameters verknüpft sind, der mit der ersten Größe in Beziehung steht,
wobei die Kurven (20, 21) in einem zweidimensionalen Raum liegen, der durch zwei Variablen definiert ist, die jeweils mit dem Pumpenbefehl und der zweiten Größe in Beziehung stehen.

8. Verfahren nach Anspruch 7, wobei der während des Schritts e. ausgegebene Pumpenbefehl mit der während des Schritts c. bestimmten zweiten Größe gemäß einer der Kurven (20, 21) in Beziehung steht, wobei die eine der Kurven mit der ersten Größe in Beziehung steht, die während des Schritts a. bestimmt wurde.

9. Verfahren nach einem der Ansprüche 5 bis 8, des Weiteren die folgenden Schritte umfassend:
f. Bereitstellen einer zweiten Abbildungsfunktion, die die zeitlichen Trends der zweiten Größe entsprechenden zeitlichen Trends des Pumpenbefehls zuordnet, und
g. Ausgeben des Pumpenbefehls gemäß der zweiten Abbildungsfunktion auf Basis eines tatsächlichen zeitlichen Trends der zweiten Größe, die während des Schritts c. bestimmt wurde, um den Schritt b. auszuführen,
wobei die zweite Abbildungsfunktion basierend auf der ersten Größe variabei ist.

10. Verfahren nach Anspruch 9, wobei die zweite Abbildungsfunktion eine Verknüpfung von einer ersten Zeitkurve (30), die einen der zeitlichen Trends der zweiten Größe darstellt, mit einer Mehrzahl von zweiten Zeitkurven (31, 32) umfasst, die jeweils mit einem oder mehreren Werten des Parameters in Beziehung stehen und einen entsprechenden der zeitlichen Trends des Pumpenbefehls darstellen.

11. Verfahren nach Anspruch 10, wobei der während des Schritts e. ausgegebene Pumpenbefehl mit einer der zweiten Zeitkurven (31, 32) in Beziehung steht, die mit der ersten Größe, die während des Schritts a. bestimmt wurde, und mit dem tatsächlichen zeitlichen Trend der zweiten Größe in Beziehung steht, die während des Schritts c. bestimmt wurde.

12. Vorrichtung zum Steuern eines hydrostatischen Getriebes (4) eines Fahrzeugs (1), wobei das hydrostatische Getriebe (4) eine Verstellpumpe (5) und einen Hydraulikmotor (6) umfasst, der angeordnet ist, um von der Verstellpumpe (5) versorgt zu werden, um eine Achse (3) des Fahrzeugs (1) anzutreiben,
**dadurch gekennzeichnet, dass**
die Vorrichtung eine Steuereinrichtung (11) umfasst, die eine erste Größe bestimmt, die für eine Temperatur einer Bremsvorrichtung (8) des Fahrzeugs (1) kennzeichnend ist, die dazu eingerichtet ist, basierend auf einem oder mehreren Signalen, die von einem Wandler erzeugt werden, der einen Teil der Vorrichtung bildet, das Fahrzeug (1) abzubremsen,
wobei die Vorrichtung programmiert ist, um das Verfahren nach einem der vorhergehenden Ansprüche auszuführen.

## Revendications

1. Procédé de commande d'une transmission hydrostatique (4) d'un véhicule (1) lorsqu'une décélération du véhicule est demandée, la transmission hydrostatique (4) comprenant une pompe à cylindrée variable (5) et un moteur hydraulique (6) agencé pour être alimenté par la pompe à cylindrée variable (5) pour entraîner un essieu (3) du véhicule (1),
le procédé étant **caractérisé en ce qu'**il comprend les étapes consistant à :
a. déterminer une première quantité indicative d'une température d'un dispositif de freinage (8) du véhicule (1) configuré pour freiner le véhicule (1),
b. commander une cylindrée de la pompe à cylindrée variable (5) pour provoquer une décélération du véhicule en fonction de la première quantité.

2. Procédé selon la revendication 1, dans lequel la température est celle d'un liquide de frein utilisé pour entraîner le dispositif de freinage (8).

3. Procédé selon la revendication 1 ou 2, dans lequel l'étape b. comprend une diminution de la cylindrée correspondant à une augmentation de la première quantité.

4. Procédé selon l'une quelconque des revendications précédentes, dans lequel l'étape b. comprend une diminution de la cylindrée avec une vitesse accrue correspondant à une augmentation de la première quantité.

5. Procédé selon l'une quelconque des revendications précédentes, comprenant en outre l'étape consistant à :
c. déterminer une seconde quantité indicative d'une décélération demandée du véhicule (1),
dans lequel l'étape b. comprend le contrôle du déplacement également en fonction de la seconde quantité.

6. Procédé selon la revendication 5, comprenant en outre les étapes consistant à :
d. fournir une première fonction de cartographie reliant la seconde quantité à une commande de pompe pour ajuster la cylindrée,
e. émettre la commande de pompe selon la première fonction de cartographie, sur la base de la seconde quantité déterminée lors de l'étape c., pour réaliser l'étape b.,
dans lequel la première fonction de cartographie est variable sur la base de la première quantité.

7. Procédé selon la revendication 6, dans lequel la première fonction de cartographie est représentable par une pluralité de courbes (20, 21) étant chacune associée à une ou plusieurs valeurs d'un paramètre correspondant à la première quantité,
dans lequel les courbes (20, 21) s'étendent sur un espace bidimensionnel défini par deux variables correspondant respectivement à la commande de pompe et à la seconde quantité.

8. Procédé selon la revendication 7, dans lequel la commande de pompe émise lors de l'étape e. correspond à la seconde quantité déterminée lors de l'étape c. selon l'une des courbes (20, 21), ladite une des courbes correspondant à la première quantité déterminée lors de l'étape a.

9. Procédé selon l'une quelconque des revendications 5 à 8, comprenant en outre les étapes consistant à :
f. fournir une seconde fonction de cartographie reliant les tendances temporelles de la seconde quantité aux tendances temporelles respectives de la commande de pompe, et
g. émettre la commande de pompe selon la seconde fonction de cartographie, sur la base d'une tendance temporelle réelle de la seconde quantité déterminée lors de l'étape c., pour réaliser l'étape b.,
dans lequel la seconde fonction de cartographie est variable sur la base de la première quantité.

10. Procédé selon la revendication 9, dans lequel la seconde fonction de cartographie comprend une association d'une première courbe temporelle (30) représentant l'une des tendances temporelles de la seconde quantité à une pluralité de secondes courbes temporelles (31, 32) étant chacune associée à une ou plusieurs valeurs du paramètre et représentant l'une des tendances temporelles correspondantes de la commande de pompe.

11. Procédé selon la revendication 10, dans lequel la commande de pompe émise lors de l'étape g. correspond à l'une des secondes courbes temporelles (31, 32) correspondant à la première quantité déterminée lors de l'étape a. et à la tendance temporelle réelle de la seconde quantité déterminée lors de l'étape c.

12. Un appareil de commande d'une transmission hydrostatique (4) d'un véhicule (1), la transmission hydrostatique (4) comprenant une pompe à cylindrée variable (5) et un moteur hydraulique (6) agencé pour être alimenté par la pompe à cylindrée variable (5) pour entraîner un essieu (3) du véhicule (1),
**caractérisé en ce que**
l'appareil comprend une unité de commande (11) qui détermine une première quantité indicative d'une température d'un dispositif de freinage (8) du véhicule (1) configuré pour freiner le véhicule (1) sur la base d'un ou de plusieurs signaux générés par un transducteur faisant partie de l'appareil,
dans lequel l'appareil est programmé pour mettre en oeuvre le procédé selon l'une quelconque des revendications précédentes.
